Europäisches Patentamt

European Patent Office

Office européen des brevets

(19)

(11) Veröffentlichungsnummer: **0 114 226 B1**

## (12) EUROPÄISCHE PATENTSCHRIFT

(45) Veröffentlichungstag der Patentschrift:
18.01.89

(21) Anmeldenummer: 83111344.4

(22) Anmeldetag: 12.11.83

(51) Int. Cl.⁴: **C 01 B 33/02**

(54) **Verfahren zur Abtrennung von Chlorsilanen aus einem Gasgemisch mit Chlorwasserstoff und Wasserstoff.**

(30) Priorität: 24.12.82 DE 3247997

(43) Veröffentlichungstag der Anmeldung:
01.08.84 Patentblatt 84/31

(45) Bekanntmachung des Hinweises auf die Patenterteilung:
18.01.89 Patentblatt 89/3

(84) Benannte Vertragsstaaten:
DE FR GB IT NL

(56) Entgegenhaltungen:
DE-A- 2 820 617
DE-B- 1 185 593

(73) Patentinhaber: HÜLS TROISDORF
AKTIENGESELLSCHAFT, Postfach 11 65,
D-5210 Troisdorf (DE)

(72) Erfinder: Glembin, Dirk, Frans-Hals-Strasse 25,
D-5205 St. Augustin (DE)
Erfinder: Kappler, Fritz-Robert, Dr.,
Stresemannstrasse 8, D-5210 Troisdorf (DE)
Erfinder: Curatolo, Luigi, C.so Liberta, 192,
I-39012 Merano BZ (IT)
Erfinder: Trapani, Vittorio, Via Nazionale, 53,
I-39010 Sinigo BZ (IT)

ACTORUM AG

## Beschreibung

Gegenstand der vorliegenden Erfindung ist ein Verfahren zur Abtrennung von Chlorsilanen aus einem Gasgemisch aus Chlorwasserstoff, Wasserstoff und Chlorsilanen. Die Abtrennung erfolgt mittels einer Waschflüssigkeit und man erhält dabei ein Gasgemisch aus Chlorwasserstoff und Wasserstoff, das nahezu vollständig frei von Chlorsilanen ist und sich leicht in seine beiden Komponenten trennen lässt.

Gasgemische aus Chlorsilanen, Chlorwasserstoff und Wasserstoff fallen grosstechnisch als Abgase bei der Herstellung von polykristallinem Silicium an. Es ist das Bestreben, aus diesem Abgas sowohl den Chlorwasserstoff als auch den Wasserstoff zurückzugewinnen und letzteren wieder für die Herstellung des polykristallinen Siliciums einzusetzen. Dieser Wasserstoff muss jedoch frei von Verunreinigungen sein, so dass der erste und wichtigste Schritt in dieser Reinigungskette die Abtrennung der Chlorsilane aus dem Gasgemisch ist.

Es ist bereits aus der DE-PS 11 85 593 bekannt, Abgase aus der Herstellung von polykristallinem Silicium, die überwiegend die drei genannten Verbindungen enthalten, mit Wasser zu behandeln. Dabei reagieren die Chlorsilane zu Hydrolyseprodukten und der Chlorwasserstoff wird von dem Waschwasser aus dem Gasgemisch ausgewaschen. Nachteilig bei dieser Verfahrensweise ist der Umstand, dass dabei aus dem Chlorwasserstoff eine nur verdünnte Salzsäure entsteht. Weiterhin neigen die Hydrolyseprodukte leicht zu Krustenbildungen in der Apparatur. Der technische Aufwand zur nahezu vollständigen Befreiung dieser Salzsäure von den suspendierten Hydrolyseprodukten ist sehr hoch. Ebenfalls nur mit hohem technischen Aufwand und Energieeinsatz ist die verdünnte Salzsäure «aufzukonzentrieren». Dieser Weg wird daher im allgemeinen nicht bestritten und die verdünnte Salzsäure wird daher durch Neutralisation mit Natronlauge vernichtet.

Es bestand deshalb die Aufgabe, aus einem Gasgemisch aus Wasserstoff, Chlorwasserstoff und Chlorsilanen letztere durch Auswaschen in der Weise zu entfernen, dass die beim Auswaschen entstehenden Hydrolyseprodukte in gut filtrierbarer Form anfallen und der Chlorwasserstoff nicht ebenfalls in der Waschflüssigkeit verbleibt, sondern als Gemisch mit dem Wasserstoff gasförmig erhalten bleibt.

In Erfüllung dieser Aufgabe wurde nun ein Verfahren zur Abtrennung von Chlorsilanen aus einem Gasgemisch aus Chlorwasserstoff, Wasserstoff und Chlorsilanen gefunden, bei dem dieses Gasgemisch mit Wasser unter Hydrolysatbildung ausgewaschen wird, das dadurch gekennzeichnet ist, dass man das Auswaschen mit gesättigter Salzsäure, in der die beim Auswaschen anfallenden Hydrolyseprodukte der Chlorsilane suspendiert bleiben, durchführt.

Bei Durchführung dieser erfindungsgemässen Verfahrensweise fällt ein Gasgemisch an, das fast vollständig von den Chlorsilanen befreit ist und nur noch die Komponenten Chlorwasserstoff und Wasserstoff enthält. Zusätzlich führt das Gas noch geringe, dem Partialdruck des Wassers entsprechende, Mengen an Wasserdampf mit sich. Die anfallenden Hydrolyseprodukte der Chlorsilane neigen nicht zur Krusten- und Klumpenbildung und lassen sich leicht mit Hilfe bekannter Filtrationsverfahren abtrennen.

Der Gehalt an Chlorwasserstoff in der als Waschflüssigkeit eingesetzten Salzsäure hängt von dem Partialdruck des Chlorwasserstoffs bei der gewählten Arbeitstemperatur ab. Er liegt im allgemeinen über 25 Gew.-% und kann bis zu 45 Gew.-% oder mehr betragen. Solche gesättigte Salzsäure wird auch als rauchende Salzsäure bezeichnet. Die Salzsäure soll bereits als möglichst gesättigte Salzsäure eingesetzt werden, so dass sie während des Auswaschens nur noch geringe Mengen an Chlorwasserstoff absorbieren kann. Diese Mengen sollen nach Möglichkeit 5 Gew.-% nicht übersteigen. Sie hängen von dem Partialdruck an Chlorwasserstoff in dem gesamten System ab. Erfindungsgemäss wird also unter einer gesättigten Salzsäure auch eine soche Salzsäure verstanden, die bei der sich einstellenden Betriebstemperatur noch die genannten geringen Mengen an Chlorwasserstoff aufnehmen kann, wobei ebenfalls noch die erfindungsgemässe Wirkung eintritt.

Die Arbeitstemperatur hängt sowohl von der Umgebungstemperatur als auch von der Menge des in dem Gasgemisch enthaltenen Chlorsilans ab. Vorzugsweise liegt sie zwischen 20 und 40 °C; sie kann jedoch sowohl unterhalb als auch oberhalb dieser Werte liegen. Da die Bildung der beim Auswaschen entstehenden Hydrolysenprodukte exotherm ist, kann es zweckmässig sein; bei einem höheren Gehalt an Chlorsilanen, die Salzsäure vor dem Einleiten in das System abzukühlen.

Das Auswaschen des Gasgemischs aus Chlorwasserstoff, Wasserstoff und Chlorsilanen mit der gesättigten Salzsäure kann auf beliebige, an sich bekannte Weise durchgeführt werden, die einen möglichst langen und intensiven Kontakt des Gasgemischs mit der Waschflüssigkeit ermöglichen. Als bevorzugte Durchführungsform hat sich ein Eindüsen bzw. Einspritzen oder Einsprühen der Waschflüssigkeit in den Gasstrom erwiesen. Dabei kann das Einbringen der Waschflüssigkeit sowohl im Gegenstrom zu dem Gasgemisch als auch im Gleichstrom mit dem Gasgemisch erfolgen.

Die während des Auswaschens mit der gesättigten Salzsäure anfallenden Hydrolyseprodukte der Chlorsilane beeinträchtigen das Auswaschen praktisch nicht. Die Salzsäure kann deshalb diese Hydrolyseprodukte, soweit sie als Feststoffe anfallen, suspendiert enthalten. Da bei einer kontinuierlichen Betriebsweise sich diese festen Hydrolyseprodukte zunehmend anreichern, ist es empfehlenswert, diese Feststoffe von Zeit zu Zeit teilweise oder vollständig aus der Salzsäure zu entfernen. Dies ist z.B. durch einfache Filtration möglich, da diese Hydrolyseprodukte in Form leicht filtrierbarer Feststoffe anfallen.

Bei einer kontinuierlichen Arbeitsweise gemäss dem erfindungsgemässen Verfahren ist es von Vorteil, die gesättigte Salzsäure im Krislauf zu führen und dabei einen Teistrom abzuzweigen, der über ein Filter und gegebenenfalls über einen Zwischenbehälter führt. Dieser Teistrom wird dann dem Waschsystem wieder zugeführt.

Das nach dem erfindungsgemässen Verfahren erhaltene Gasgemisch aus Chlorwassserstoff und Wasserstoff enthält noch geringe Mengen an Wasserdampf; bei einer kontinuierlichen Arbeitsweise müssen diese Mengen von Zeit zu Zeit ersetzt werden, indem Wasser oder wässrige Salzsäure in der entsprechenden Menge dem System hinzugefügt werden.

Die Auftrennung des anfallenden Gasgemischs in die beiden Komponenten Chlorwasserstoff und Wasserstoff erfolgt nach an sich bekannten Verfahren; so ist es möglich, den Chlorwasserstoff in Wasser zu absorbieren und auf diese Weise sehr reine Salzsäure zu erhalten, aus der gegebenenfalls durch anschliessende Desorption gasförmiger Chlorwasserstoff gewonnen werden kann. Der nach Absorption des Chlorwasserstoffs erhaltene Wasserstoff kann nach Trocknung und Reinigung wieder für die Silicium-Abscheidung eingesetzt werden.

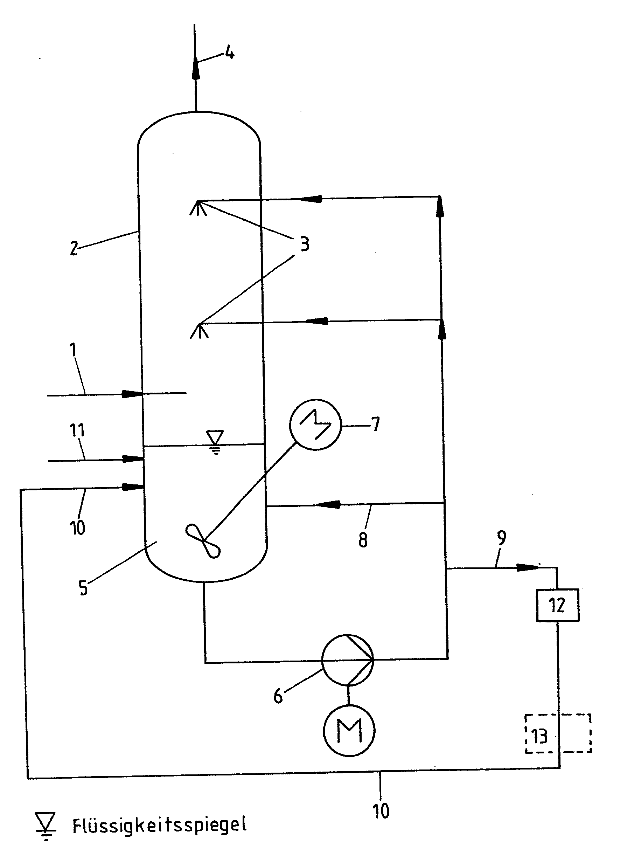

In der beigefügten Zeichnung wird das Verfahren beispielhaft erläutert.

Durch die Leitung 1 wird dem Gaswäscher 2 ein mit Chlorsilanen beladenes Abgas zugeführt. Dieses Gasgemisch passiert eine oder mehrere Düsen 3 und verlässt den Gaswäscher zum grössten Teil von Chlorsilanen befreit durch die Leitung 4 als Chlorwasserstoff/Wasserstoff-Gemisch. Auch die Umkehrung ist möglich: Der Abgaseintritt erfolgt durch die Leitung 4 und das gereinigte Gasgemisch verlässt den Gaswäscher durch die Leitung 1.

In dem Sumpf 5 des Gaswäschers befindet sich gesättigte Salzsäure, in der die bei der Absoption anfallenden Chlorsilan-Hydrolyseprodukte suspendiert sind. Mit Hilfe der Pumpe 6 wird die Suspension umgepumpt. Ein Rührer 7 oder eine Leitung 8, durch die ständig ein Teil der von der Pumpe geförderten Menge strömt, verhindern duch Turbulenzerzeugung das Sedimentieren der Hydrolyseprodukte im Sumpf des Gaswäschers.

Mit Hilfe der Düsen 3 wird die Suspension in den Wäscher gesprüht. An den einzelnen Tropfen der versprühten Suspension erfolgt die Absorption der Chlorsilane aus dem Abgas und deren Reaktion zu Chlorwasserstoff und Hydrolyseprodukten. Die Tropfen werden im Sumpf des Gaswäschers aufgefangen.

Durch die Leitung 9 wird ein Teil der Suspension ausgeschleust und einer Filtration bei 12 zugeführt. Das Filtrat wird durch die Leitung 10, die gegebenenfalls über einen Zwischenbehälter 13 führt, in den Gaswäscher 2 zurückgeführt. Durch die Leitung 11 wird Wasser in den Gaswäscher 2 geführt, um die Verluste, die durch den Wasserdampf, der partialdruckmässig mit dem Abgas den Gaswäscher durch die Leitung 4 verlässt, und durch den ausfiltrierten feuchten Feststoff auftreten, zu decken.

Beispiel 1

In eine Gaswäscher gemäss Zeichnung wird ein Chlorwasserstoff-Wasserstoff-Gemisch mit einem Chlorsilangehalt, der mehr als 1000 mg Silicium/$m^3$ entspricht, eingeleitet. Der Gaswäscher wird im Gegenstrom betrieben mit Gasgeschwindigkeiten zwischen 0,05 und 0.15 m/s und Gasverweilzeiten von 10 bis 25 s. Die beiden Düsen 3 werden zusammen beaufschlagt mit einer Suspensionsmenge von 0,5 bis 1,7 $m^3$/h, der Differenzdruck in den Düsen beträgt 2 bis 6 bar. Die maximale Feststoffkonzentration der Suspension beträgt 50 g/l (als Silicium ausgedrückt).

In dem den Gaswäscher bei 4 verlassenden Chlorwasserstoff-Wasserstoff-Gemisch werden Konzentrationen von minimal 40 mg Si/$m^3$ gefunden. In einem ähnlich betriebenen, nachgeschalteten Gaswäscher konnte die Abgaskonzentration bis auf 5 mg Si/$m^3$ gesenkt werden.

Beispiel 2

Ein gleiches Waschergebnis wurde mit einem Strahlwäscher, anstelle der Düsen, erhalten. Hierbei lag die Eintrittskonzentration zwischen 500 und 1000 mg Silicium/$m^3$, die Suspensionsmenge zwischen 1,5 und 2,0 $m^3$/h, der Differenzdruck an der Düse 6 bar und die Gasgeschwindigkeiten zwischen 5 und 10 m/s.

**Patentansprüche**

1. Verfahren zur Abtrennung von Chlorsilanen aus einem Gasgemisch aus Chlorwasserstoff, Wasserstoff und Chlorsilanen durch Auswaschen des Gasgemischs mit einer Waschflüssigkeit, dadurch gekennzeichnet, dass das Auswaschen mit gesättigter Salzsäure, in der die beim Auswaschen anfallenden Hydrolyseprodukte der Chlorsilane suspendiert sind, durchgeführt wird.

2. Verfahren gemäss Anspruch 1, dadurch gekennzeichnet, dass man die gesättigte Salzsäure in feinverteilter Form in den auszuwaschenden Gasstrom einbringt.

3. Verfahren gemäss Ansprüchen 1 oder 2, dadurch gekennzeichnet, dass die Salzsäure im Kreislauf geführt wird, wobei ein Teilstrom über ein Filter und gegebenenfals einen Zwischenbehälter geleitet wird.

4. Verfahren gemäss einem der Ansprüche 1 bis 3, dadurch gekennzeichnet, dass dem Kreislaufsystem Wasser oder Salzsäure in der Menge, die während des Auswaschens dem System entzogen wird, hinzugefügt wird.

**Claims**

1. Process for the separation of chlorosilanes from a gaseous mixture of hydrogen chloride, hydrogen and chlorosilanes by scrubbing the gas mixture with a washing liquid, characterised in that the scrubbing is carried out with saturated hydrochloric acid in which the hydrolysis products of the chlorosilanes being deposited in the scrubbing are suspended.

2. Process according to claim 1, characterised in that the saturated hydrochloric acid is introduced in finely distributed form into the flow of gas to be scrubbed.

3. Process according to claims 1 or 2, characterised in that the hydrochloric acid is directed in the circuit with a part-stream being conducted via a filter and possibly an intermediate container.

4. Process according to one of claims 1 to 3, characterised in that water or hydrochloric acid is supplied to the circuit in the amount which is withdrawn from the system during the scrubbing.

**Revendications**

1. Procédé de séparation de chlorosilanes d'un mélange gazeux constitué de gaz chlorhydrique, d'hydrogène et de chlorosilanes, par lavage du mélange gazeux à l'aide d'un liquide de lavage, caractérisé en ce que le lavage est réalisé avec de l'acide chlorhydrique saturé, dans lequel sont en suspension les produits, obtenus lors du lavage, de l'hydrolyse des chlorosilanes.

2. Procédé selon la revendication 1, caractérisé en ce qu'on introduit l'acide chlorhydrique saturé dans le courant gazeux à laver, sous forme finement divisée.

3. Procédé selon les revendications 1 ou 2, caractérisé en ce que l'acide chlorhydrique circule en circuit fermé, un courant partiel étant envoyé sur un filtre, et éventuellement dans un réservoir intermédiaire.

4. Procédé selon l'une des revendications 1 à 3, caractérisé en ce qu'on ajoute au circuit fermé de l'eau ou de l'acide chlorhydrique en une quantité égale à celle soutirée du système lors du lavage.

▽ Flüssigkeitsspiegel